# EUROPEAN PATENT APPLICATION

(11) **EP 3 291 354 A1**
(43) Date of publication of application: **07.03.2018**
(21) Application number: 16186279.2
(22) Date of filing: 30.08.2016
(51) Int. Cl.: H01M 10/44, H02J 7/00, H01M 10/052

(54) **CHARGING STRATEGY FOR PREVENTING LITHIUM PLATING IN A LITHIUM ION BATTERY**

(71) Applicant: Lithium Energy and Power GmbH & Co. KG, 70469 Stuttgart (DE)
(72) Inventor: Lange, Ulrich, 72631 Aichtal (DE); Ziegler, Joerg, 71277 Rutesheim (DE); Kohn, Peter, 70178 Stuttgart (DE); Nipper, Johannes Maximilian, 71686 Remseck (DE); Poehler, Joerg, 70825 Korntal-Muenchingen (DE); Dufaux, Thomas, 70437 Stuttgart (DE)
(74) Representative: Bee, Joachim

(57) **Abstract**

Method (100) for charging a lithium ion battery (60) using a charging process, the charging process comprising
- at least one charging phase (110) and
- at least one homogenization phase (120),
wherein during the charging phase (110) the battery (60) is charged using a constant current, and
during the homogenization phase (120) local inhomogeneous states of charge (150) at different regions (50) of the battery (60) are equilibrated.

## Description

The invention relates to a method according to the independent method claim and a charging device according to the independent apparatus claim.

### State of the art

From DE 10 2013 007 011 A1 a method for charging a lithium-ion-battery is known. A battery management system is used, wherein at least one reference curve is stored that comprises a course of an enlargement of the cell volume and / or the cell thickness at a charging operation, up to which no lithium-plating occurs, dependent on charging current, temperature, state of charge and state of health of the lithium ion battery.

From US 2011 00 37 438 A1 a system is known that charges a battery. During operation, the system obtains a set of charging currents and a set of charging voltages. The system repeats constant-current and constant-voltage charging operations, until a termination condition is reached.

### Disclosure of the invention

The invention of this application is described in the independent method and apparatus claims. Further features and details of the invention result from the dependent claims, the description and the drawings. Thereby, the features and details which are described corresponding to the method according to the invention naturally also apply corresponding to the device according to the invention and vice versa, so that according to the disclosure of the single aspects of the invention, it can always be reciprocally related to.

Preferably, the invention relates to a method for charging a lithium ion battery using a charging process, wherein the charging process comprises at least one charging phase and at least one homogenization phase. Particularly, during the charging phase, the battery is charged using a constant current (especially by performing a constant current charging). Provision may be made during the homogenization phase for local inhomogeneous states of charge at (of) different regions of the battery, particularly inhomogeneous lithiated regions of an anode, to be equilibrated (especially balanced). For example, the anode may be a graphite anode.

It may also be provided that, in particular for carrying out the charging process, the charging process and in particular the homogenization phase is carried out depending on (and considering) potential differences of (between) the different regions such that the homogenization phase is carried out (particularly only) if there is at least one (for example significant) potential difference between at least two of the regions of / with inhomogeneous states of charge. This has the advantage that lithium plating may be prevented, which increases the lifetime of the battery. This can also prevent a rapid decrease of the capacity of the battery. Furthermore, the safety may be increased, because substantially no lithium dendrites can occur. Another advantage of the invention is that the charging time (duration) may be reduced.

It is also conceivable that the different phases of the charging process, namely the charging phase and the homogenization phase, are carried out (executed) depending on the potential differences of (between) the different regions. For instance, the number of executions of the phases, for example single or repeated, or the choice or sequence of the phases depends on the potential differences. In other words, the charging process is carried out depending on the potential differences of the different regions, in particular by carrying out the homogenization phase (only) if there is at least one significant potential difference between at least two of the regions with inhomogeneous states of charge. The point of time when such a significant potential difference occurs is particularly determined by evaluating a charging curve and/or charging parameters and/or measurement values and/or the like.

Particularly, the reason for the importance of the potential differences is that local resistance differences within a cell of the battery may effect an inhomogeneous lithiation of an electrode, for example an anode, of the battery. Such resistance differences may be a result of an inhomogeneous pressure within the battery of a jelly roll or of local aging differences within a cell. As a result, a higher charging current per area flows locally at regions of lower resistance than at regions with higher resistance. At these regions with higher charging current (per area), a higher lithiation of the anode and possibly a lithium plating on graphite can occur, because locally the capacity of the graphite is not sufficient for the intercalation of the lithium.

According to another aspect of the invention, the charging process is carried out depending on the potential differences such that inhomogeneous states of charge of an anode of the battery are equilibrated (balanced). In particular, the equilibration (or equalization) is normally possible when a potential difference exists between different regions of inhomogeneous states of charge of the battery, in particular of an anode of the battery, most preferably of a graphite anode. This in particular effects that for regions of a higher state of charge lithium ions are dissolving and intercalating in the regions with a lower degree of lithiation.

However, it is conceivable that certain conditions and/or constrictions exist under which an equilibration is not feasible, because despite different states of charge there is no potential difference. In particular, such a condition or constriction may be called plateaus (for example voltage plateau or potential plateau or the like) herein after. Accordingly, the different regions of the battery, particular the inhomogeneous lithiated regions of the anode, are regions which are suitable for producing such plateaus. An example for such regions are the regions of a graphite anode. In other words, a voltage plateau may be a range, in which different regions of the anode with different states of charge have a (substantially) equal potential, so that no equilibration can take place. Also, the voltage plateau may particularly indicate a range of states of charge in which at least one of the regions has the same potential or voltage for different states of charge.

Advantageously, the charging process is carried out such that the homogenization phase is carried out when the regions of (with) inhomogeneous states of charge (that means especially inhomogeneous lithiated regions) lie on different voltage plateaus (or voltage levels). In particular, the homogenization phase is performed at the steps of a charging curve, especially of a graphite anode, wherein in particular these steps (transitions) lie between the plateaus (both may be visible in the charging curve).

Preferably, the inventive method comprises at least one of the following steps, which in particular may be performed sequentially or in any order:
a) Carrying out the charging phase after starting the charging process,
b) Obtaining at least one measurement value that depends on an anode voltage of an anode of the battery, particularly a graphite anode, and/or that depends on a battery voltage of at least one battery cell of the battery,
c) Comparing the at least one measurement value with at least one predetermined value in order to determine a comparison result such that the comparison result is specific for the significant potential difference,
d) Stopping the charging phase and carrying out the homogenization phase depending on the comparison result,
e) Resuming the charging phase after a homogenization period of time,
f) Finishing the charging process.

In particular, the steps of the inventive method can be executed in the alphabetical order, in particular a) to b), a) to c), a) to d), a) to e) or a) to f) or in a different order. Further, single or all steps of the method can be repeated in particular.

Preferably, it may be provided that the steps b) to e) are repeated until a stopping condition is reached and the charging process is finished, in particular until a (particularly cell) voltage reaches an end-of-charge-voltage. Alternatively, the steps a) to f) or b) to e) are executed without repetition until the stopping condition and the charging process is finished. The end-of-charge-voltage may be determined by using a measurement apparatus. This has the advantage, that a sufficient charging of the battery is achieved.

It may be provided that the presence of significant potential differences between the regions is estimated by evaluating a charging curve of the battery, particularly of an anode and/or of a battery cell, wherein the charging curve is specific for a plurality of voltage plateaus with a substantially constant voltage, and the charging process is carried out such that the at least one homogenization phase is provided for transitions between different voltage plateaus. Furthermore, it may be possible that the charging curve is specific for a plurality of steps which lie between the voltage plateaus. The transitions may relate to these steps. This has the advantage that the transitions (or steps) or the voltage plateaus may be identified by using the charging curve. The charging curve may be determined by a measurement before or during the charging process.

It may be conceivable that the different regions of the battery are (especially only) regions of a graphite anode of the battery. It may further be provided that at least 2 or 4 or 6 or 10 or 50 or 100 or 200 different regions of the (especially one) battery exist.

Furthermore, it can be possible that the homogenization phase initiates an equilibration (a balancing) of the different states of charge of the different regions of the anode by
- pausing the charging process, in particular in the voltage region of the steps in the charging curve, and/or
- using a cycling process, particularly with a low ΔSOC (state of charge difference) in the voltage region of the steps in the charging curve, in particular by using a very low current for charging and subsequently discharging repeatedly such that the equilibration is performed, and/or
- charging using a constant voltage, in particular at a voltage of the steps in the charging curve, for example a constant voltage charging, wherein particularly the duration of the homogenization phase depends on the charged battery.

It is also conceivable that a combination of these alternatives (for example pausing and using a constant voltage for charging) may be used. This has the advantage that an efficient charging can be performed.

Preferably, in the homogenization phase a cycling process is carried out by using a high discharging current and a low charging current lower than the discharging current, wherein in particular the cycling process is carried out for a small state of charge difference, which in particular is lower than 5 % or lower than 2 % or lower than 1 % or lower than 0.5 % of the fully charged state of the battery. This has the advantage, that lithium plating may be significantly reduced.

Advantageously, the charging process is performed by repeating the charging phase and the homogenization phase until a stopping condition is reached, in particular until a cell voltage of the battery reaches an end-of-charge-voltage, wherein
- in a first charging phase the battery is charged until a voltage of the battery (for example of a battery cell) or a state of charge of the battery (for example of an anode or of a cell of the battery) reaches a first predetermined value,
- in a second charging phase the battery is charged until the voltage of the battery or the state of charge of the battery reaches a second predetermined value,
- in a last charging phase the battery is charged until the stopping condition is reached,
wherein each first and second charging phase is followed by the homogenization phase. It is possible that the predetermined values may be determined by a measurement during the charging process or before the charging process and therefore may be saved (for example permanently or persistently) and/or read out from a data storage during the charging process. This allows an easy way of controlling the charging process.

It may be conceivable that during the charging process each of the at least two regions of (with) inhomogeneous states of charge has a local state of charge that differs from a (global) state of charge of the battery, and particularly these regions have only the at least one significant potential difference among each other at transitions of voltage plateaus, and the presence of the at least one significant potential difference between the regions (and/or the voltage plateaus) is detected by performing at least one of the following steps, which in particular may be performed sequentially or in any order:
- obtaining at least one first measurement information by measuring a charging curve of the battery, in particular outside or before the charging process starts,
- determining a transition information by identifying transitions between voltage plateaus on basis of the first measurement information and/or a specification (or template), wherein each transition indicates that the different regions have the significant potential difference,
- obtaining at least one second measurement information by measuring a measurement value depending on a voltage of the battery for different states of charge of the battery, in particular inside the charging process,
- comparing the second measurement information with the transition information such that the homogenization phase is performed if the significant potential difference is able to effect a significant equilibration of the inhomogeneous states of charge of the regions,
wherein in particular the significance of the potential difference is determined by parametrization of the specification, which is particularly done outside or before the charging process by an optimization procedure. This may be advantageous since potential (voltage) differences can be identified fast and effectively and/or with less effort.

Another aspect of the present invention is a charging device, in particular a fast charging device, for fast charging a lithium ion battery using a charging process, wherein
the charging process is carried out according to a method according to the invention. Therefore, the device according to the invention can provide all the advantages as discussed in the context of the method according to the invention.

Further advantages, features and details of the invention result from the following description, in which with reference to the drawings embodiments of the invention are described in detail. Thereby, the features described in the claims and in the description can be each single or in every combination be essential for the invention. It is shown in:
- Fig. 1: a schematic representation of parts of the battery
- Fig. 2: another schematic representation of parts of the battery at different points in time
- Fig. 3: a schematic visualization of an equilibration
- Fig. 4: a schematic visualization of a charging curve of the anode, in particular a graphite anode,
- Fig. 5: a schematic visualization of a charging curve, in particular of a Lithium-Ion cell, particularly a Lithium-Ion cell with a graphite anode,
- Fig. 6: a schematic visualization of an inventive method
- Fig .7: another schematic visualization of an inventive method

In the different figures same features always correspond to the same reference signs, therefore, generally the features are only described once.

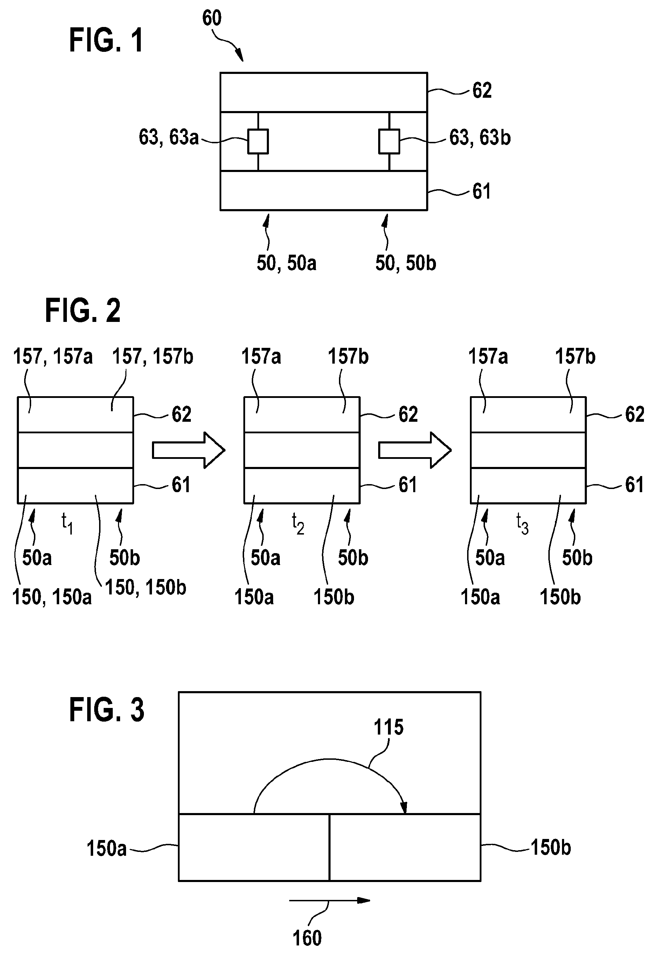

Figure 1 shows at least one part of the battery 60, for example a battery cell. It can be seen that local resistance differences 63 exist between an anode 61, for example a graphite anode, and a cathode 62 of the battery 60. By way of example, only two local resistance differences 63, namely a first local resistance difference 63a and a second local resistance difference 63b, are shown. Of course, further local resistance differences 63 can exist. Additionally, different regions 50 of the battery 60 are presented, namely a first region 50a and a second region 50b.

As can be seen in figure 2, the local resistance difference 63 may lead to local inhomogeneous states of charge 150 of the different regions 50 of the battery 60. In figure 2, for illustrating the underlying effect of the lithium plating, a first state of charge of a first region of the cathode 62 is indicated by the reference no. 157a and the second state of charge of a second region of the cathode 62 is indicated at the reference no. 157b. Beside these states of charge 157 of the cathode 62, also the states of charge 150 at (of) different regions of the anode 61 are indicated. Accordingly, reference no. 150a indicates a first state of charge of the first region 50a of the anode 61 and the reference no. 150b indicates a second state of charge of the second region 50b of the anode 61.

According to the lithium plating process, after a first charging phase 110 (at a first point of time t1) the first state of charge 157a of the first region of the cathode 62 is smaller than the second state of charge 157b of the second region of the cathode 62. For example, the first state of charge 157a amounts to 60 % and the second state of charge 157b amounts to 100 %. Also the first state of charge 150a of the first region 50a of the anode 61 amounts to 60 % and the second state of charge 150b of the second region 50b of the anode 61 amounts to 100 %. After a balancing or equilibration (only of the cathode 62) the first state of charge 157a of the first region of the cathode 62 equals to the second state of charge 157b of the second region of the cathode 62, namely 80 % (by way of example) at a second point of time t2. However, since an equilibration of the anode 61 did not take place (in particular because of a voltage plateau 175), the first state of charge 150a of the anode 61 is still 60 % and the second state of charge 150b of the anode 61 is still 100 %. A reason for the situation that an equilibration of the anode 61 has not occurred is that both regions 50 (that means the first and second region 50a, 50b) of the anode 61 lie on the same voltage plateau 175 and have therefore no potential difference 160. During a further charging phase 110, lithium plating may be effected by these different states of charge 150, especially in the second region 50b and/or the second state of charge 150b of the anode 61 at a third point in time t3.

In order to prevent such a lithium plating, an effecting of an equilibration 115 between the regions of different states of charge 150 of the anode 61 is initiated. According to figure 3, the equilibration 115 can be performed when a potential difference 160 exists between the first region 50a of the first state of charge 150a and the second region 50b of the second state of charge 150b of the anode 61.

Therefore, according to the inventive method, after a charging phase 110 has carried out, a homogenization phase 120 for such an initiation of the equilibration 115 may be used. The homogenization phase 120 may only be used when the equilibration is possible, that means outside of voltage plateaus (when potential difference 160 between the regions 50 exists). In order to coordinate both phases and/or in order to trigger the homogenization phase, a charging curve 170 may be (automatically) evaluated.

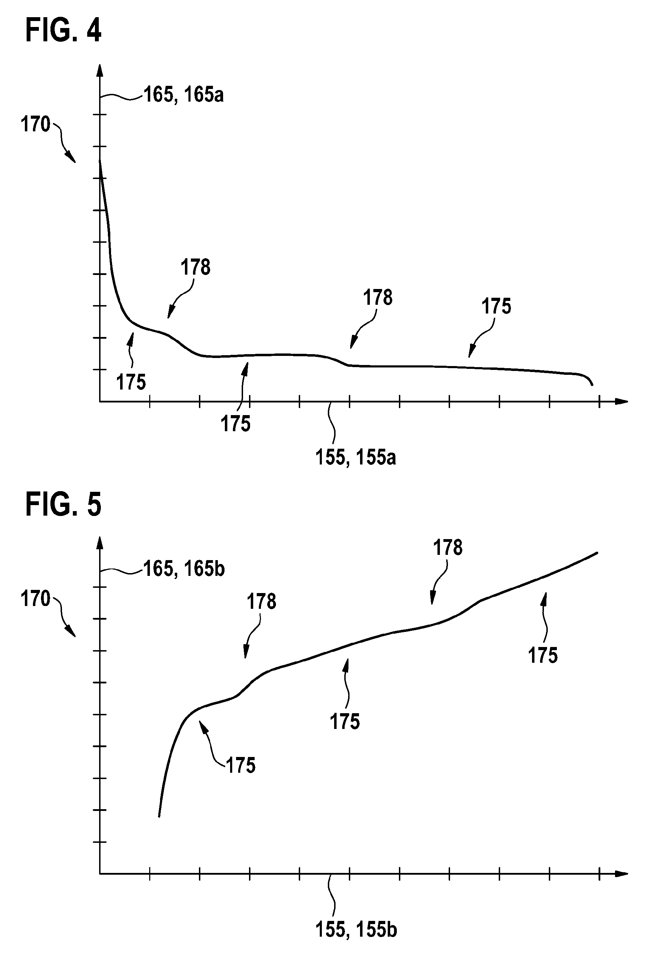

Figure 4 shows a charging curve 170 of a graphite anode by way of example, wherein a voltage 165, especially a voltage 165a of an anode 61 of a battery 60, is shown for different states of charge 155, especially states of charge 155a of the anode 61 of the battery 60. As can be seen, several voltage plateaus 175 exist and several transitions 178 are recognizable there in between.

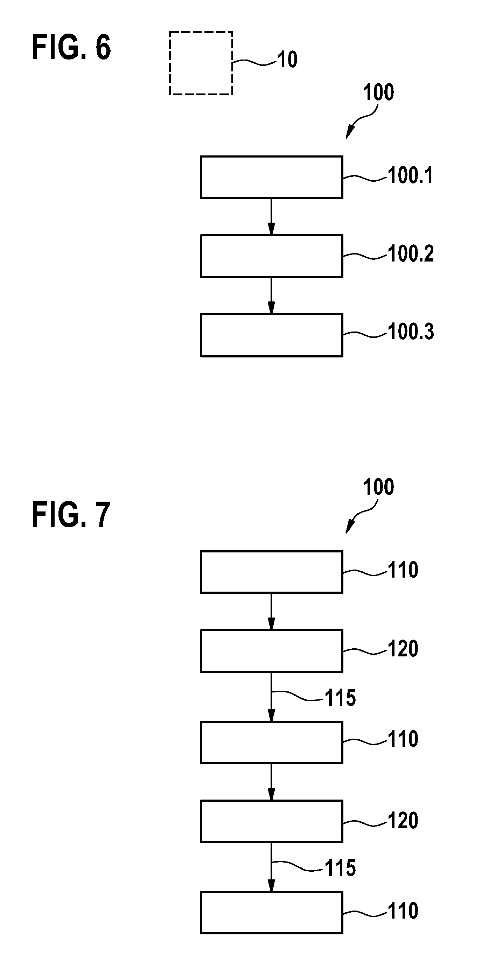

As can be seen by figure 5, the voltage plateaus 175 and/or the transitions 178 which might be used for the inventive charging process may also be identified in a charging curve 170 for the (whole) cell and/or battery 60 (that is globally and not only for the anode 61), since the cell/battery voltage is the difference between the potential of the cathode and the potential of the anode (U_{cell}=ρ_{cathode}-ρ_{Anode}). Therefore, the charging curve 170 presented in figure 5 shows a voltage 165b of the (whole) battery 60 for different states of charge 155b of the battery 60. Figure 6 shows the method steps of an inventive method 100. In order to identify significant potential differences 160, for example by identifying voltage plateaus 175 and/or transitions 178 in a charging curve 170, a measurement device of a charging device 10 may be provided. Mainly, the charging device 10 is used for fast charging a lithium ion battery 60 according to the method 100 according to the invention. In a first method step 100.1, for example a first charging phase 110, the battery 60 is charged until a voltage 165 of the battery 60 or a state of charge 155 of the battery 60 reaches a first predetermined value. In a second method step 100.2, for example in a second charging phase 110, the battery 60 is charged until the voltage 165 of the battery 60 or the state of charge 155 of the battery 60 reaches a second predetermined value. In a third method step 100.3, for example in a last charging phase, the battery 60 is charged until the stopping condition is reached. Herein, each first and second charging phase is followed by the homogenization phase 120.

In figure 7, first a charging phase 110 is carried out, in particular depending on potential differences 160 of the different regions 50. For example, this dependence is that the charging phase 110 is stopped and the homogenization phase 120 is started when a predetermined condition is reached. This predetermined condition is for example a defined voltage value at the transitions 178 of the charging curve 170 or a defined amount of charged capacity, wherein this amount should correspond to the positions in the charging curve 170, where the transitions 178 occur. If this charge quantity (or charge amount) is used as criteria it must be adapted to the aging of the battery 60, because the capacity of the battery 60 is reduced over time.

After performing the charging phase 110 and reaching the said condition, at least one homogenization phase 120 is carried out such that an equilibration can take place. Then, further charging phases 110 and/or homogenization phases 120 may be performed until a stopping condition is reached. Each phase may take place for at least 1 minute or at least 10 minutes or at least 1 hour, or up to 20 minutes or up to 1 hour.

The previous description of the embodiments describes the present invention only within the scope of examples. Naturally, also single features of the embodiments as far as technically meaningful can be freely combined with one another without leaving the scope of the present invention.

## Claims

1. Method (100) for charging a lithium ion battery (60) using a charging process, the charging process comprising
- at least one charging phase (110) and
- at least one homogenization phase (120),
wherein during the charging phase (110) the battery (60) is charged using a constant current, and
during the homogenization phase (120) local inhomogeneous states of charge (150) at different regions (50) of the battery (60) are equilibrated, **characterized in that**
the charging process is carried out depending on potential differences (160) of the different regions (50) such that the homogenization phase (120) is carried out if there is at least one significant potential difference (160) between at least two of the regions (50) of inhomogeneous states of charge.

2. Method (100) according to claim 1,
**characterized in that**
the method comprises the following steps, which in particular may be performed sequentially or in any order:
a) Carrying out the charging phase (110) after starting the charging process,
b) Obtaining at least one measurement value that depends on an anode voltage (165a) of an anode (61) of the battery (60), particularly a graphite anode (61), and/or that depends on a battery voltage (165b) of at least one battery cell of the battery (60),
c) Comparing the at least one measurement value with at least one predetermined value in order to determine a comparison result such that the comparison result is specific for the significant potential difference (160),
d) Stopping the charging phase (110) and carrying out the homogenization phase (120) depending on the comparison result,
e) Resuming the charging phase (110) after a homogenization period of time,
f) Finishing the charging process.

3. Method (100) according to claim 2,
**characterized in that**
steps b) to e) are repeated until a stopping condition is reached and the charging process is finished, in particular until a voltage (165) reaches an end-of-charge voltage.

4. Method (100) according to any of the previous claims,
**characterized in that**
the presence of significant potential differences (160) between the regions (50) is estimated by evaluating a charging curve (170) of the battery (60), particularly of an anode (61) and/or of a battery cell, wherein the charging curve (170) is specific for a plurality of voltage plateaus (175) with a substantially constant voltage, and the charging process is carried out such that the at least one homogenization phase (120) is provided for transitions (178) between different voltage plateaus (175).

5. Method (100) according to any of the previous claims,
**characterized in that**
the different regions (50) of the battery (60) are regions (50) of a graphite anode (61) of the battery (60).

6. Method (100) according to any of the previous claims,
**characterized in that**
the homogenization phase (120) initiates an equilibration (115) of the different states of charge of the different regions (50) by
- pausing the charging process, in particular at the transition regions (178), or
- using a cycling process, in particular around the transition regions (178), in particular by using a very low current for charging and subsequently discharging repeatedly such that the equilibration (115) is performed,
- charging using a constant voltage, in particular with a voltage at the transition regions (178),
wherein particularly the duration of the homogenization phase (120) is dependent on the charged battery (60).

7. Method (100) according to any of the previous claims,
**characterized in that**
in the homogenization phase (120) a cycling process is carried out by using a high discharging current and a low charging current lower than the discharging current, wherein in particular the cycling process is carried out for a small state of charge difference, which is lower than 5 % or lower than 2 % or lower than 1 % or lower than 0.5 % of the fully charged state of the battery (60).

8. Method (100) according to any of the previous claims,
**characterized in that**
the charging process is performed by repeating the charging phase (110) and the homogenization phase (120) until a stopping condition is reached, wherein
- in a first charging phase (110) the battery (60) is charged until a voltage (165) of the battery or a state of charge (155) of the battery (60) reaches a first predetermined value,
- in a second charging phase (110) the battery (60) is charged until the voltage (165) of the battery (60) or the state of charge (155) of the battery (60) reaches a second predetermined value,
- in a last charging phase the battery (60) is charged until the stopping condition is reached,
wherein each first and second charging phase is followed by the homogenization phase (120).

9. Method (100) according to any of the previous claims,
**characterized in that**
during the charging process each of the at least two regions (50) of inhomogeneous states of charge (150) has a local state of charge (150) that differs from a state of charge (155) of the battery (60), and particularly the regions (50) have only the at least one significant potential difference (160) among each other at transitions (178) of voltage plateaus (175), and the presence of the at least one significant potential difference (160) between the regions (50) is detected by performing the following steps:
- obtaining at least one first measurement information by measuring a charging curve of the battery (60),
- determining a transition information by identifying transitions (178) between voltage plateaus (175) on basis of the first measurement information and a specification, wherein each transition (178) indicates that the different regions (50) have the significant potential difference (160),
- obtaining at least one second measurement information by measuring a measurement value depending on a voltage (165) of the battery (60) for different states of charge (155) of the battery (60), in particular inside the charging process,
- comparing the second measurement information with the transition (178) information such that the homogenization phase (120) is performed if the significant potential difference (160) is able to effect a significant equilibration of the inhomogeneous states of charge of the regions, wherein in particular the significance of the potential difference (160) is determined by parametrization of the specification, which is particularly done outside the charging process by an optimization procedure.

10. Charging device (10), in particular fast charging device (10), for fast charging a lithium ion battery (60) using a charging process, **characterized in that**
the charging process is carried out according to a method according to any previous claim.
